Europäisches Patentamt

European Patent Office

Office européen des brevets

(11) Numéro de publication: **0 135 672**
**B1**

(12) **FASCICULE DE BREVET EUROPEEN**

(45) Date de publication du fascicule du brevet: **11.05.88**

(51) Int. Cl.⁴: **H 03 K 17/08, H 02 H 7/10**

(21) Numéro de dépôt: **84106109.6**

(22) Date de dépôt: **29.05.84**

(54) Dispositif d'équilibrage d'interrupteurs connectés en série.

(30) Priorité: **30.05.83 FR 8308891**

(43) Date de publication de la demande:
**03.04.85 Bulletin 85/14**

(45) Mention de la délivrance du brevet:
**11.05.88 Bulletin 88/19**

(84) Etats contractants désignés:
**AT BE CH DE FR GB IT LI NL SE**

(56) Documents cités:
**US-A-4 276 588**

**PATENTS ABSTRACTS OF JAPAN, vol. 6, no.
16, 29 janvier 1982, (E-92)(894);**

(73) Titulaire: **ALSTHOM
38, avenue Kléber
F-75784 Paris Cédex 16 (FR)**

(72) Inventeur: **Hennevin, Bernard
15, Allée des Glycines
F-69150 Decines (FR)**

(74) Mandataire: **Weinmiller, Jürgen et al
Lennéstrasse 9 Postfach 24
D-8133 Feldafing (DE)**

Courier Press, Leamington Spa, England.

EP 0 135 672 B1

## Description

L'invention concerne un dispositif d'équilibrage d'interrupteurs connectés en série entre une source de tension et une charge et actionnés simultanément, chaque interrupteur étant connecté en parallèle avec un montage en série d'un condensateur d'équilibrage et une diode.

Les interrupteurs électroniques, utilisés pour la réalisation de convertisseurs d'énergie électrique tels que, par exemple, des hacheurs ou des onduleurs, sont réalisés habituellement au moyen de composants semi-conducteurs tels que des thyristors, des transistors, ou des thyristors blocables par la gâchette.

La tension la plus élevée que peuvent supporter les composants semi-conducteurs est limitée actuellement à quelques centaines de volts pour les transistors et à quelques milliers de volts pour les thyristors et les thyristors blocables.

Lorsque la tension d'alimentation du convertisseur d'énergie électrique que l'on veut réaliser est supérieure à la tension que peuvent supporter les composants semi-conducteurs, il faut connecter en série plusieurs composants semi-conducteurs.

Le domaine d'application préféré du dispositif selon l'invention est celui de la connexion en série de transistors ou de thyristors blocables.

La connexion en série de transistors ou de thyristors blocables présente un inconvénient important. En effet, les transistors et les thyristors blocables présentent une dispersion de fabrication importante du temps qui s'écoule entre la commande de leur ouverture et la réalisation effective de cette ouverture.

Ceci a pour conséquence que lorsque deux transistors ou deux thyristors blocables sont connectés en série sans précaution, celui dont l'ouverture s'effectue le plus rapidement supporte temporairement la tension totale d'alimentation et est détruit.

On connait des dispositifs susceptibles d'éliminer cet inconvénient, décrits notamment dans la revue "G.E.C. Journal of Science and Technology, volume 47, n° 3, année 1981, pages 121 et 122, en ce qui concerne les transistors, et dans la brochure "GTO Application Note" de la société Toschiba, page 17, ou dans le brevet japonais JP—A—56136173 en ce qui concerne les thyristors blocables, en disposant en parallèle avec chaque transistor, ou chaque thyristor blocable, un condensateur.

Mais ces dispositifs présentent deux autres inconvénients.

Le premier inconvénient est que l'équilibrage des tensions entre les deux interrupteurs n'est pas parfaitement assuré parce que le condensateur associé à l'interrupteur dont l'ouverture s'effectue avec le retard le plus faible se charge davantage que le condensateur associé à l'interrupteur dont l'ouverture s'effectue avec le retard le plus grand. Il en résulte une augmentation de la tenue en tension nécessaire pour les interrupteurs.

Le deuxième inconvénient est que, pour maintenir le déséquilibre dans des limites acceptables, on est obligé d'employer des condensateurs de valeur relativement grande. L'énergie emmagasinée dans ces condensateurs est donc relativement élevée et comme elle est dissipée dans les résistances à chaque fermeture des interrupteurs, ceci provoque une diminution du rendement et des difficultés de refroidissement du convertisseur d'énergie électrique utilisant cette disposition.

Une amélioration peut être obtenue en utilisant des transistors ou des thyristors blocables triés et en ne connectant en série que ceux qui ont des temps de retard à l'ouverture très voisins. Mais ceci a comme inconvénient l'augmentation du coût des composants et la complication de fabrication, ainsi que la maintenance des convertisseurs d'énergie électrique ainsi réalisés.

Le dispositif selon l'invention permet d'améliorer l'équilibrage en tension de transistors ou de thyristors blocables connectés en série sans qu'aucun tri soit nécessaire et avec une réduction des pertes par rapport aux dispositions connues.

Le dispositif selon l'invention s'utilise avec des interrupteurs connectés en série entre une source de tension et une charge, actionnés simultanément et connectés chacun en parallèle avec un montage série d'un condensateur d'équilibrage et d'une diode. Il comporte un transformateur muni d'enroulements montés chacun en série avec une diode, le montage série d'un enroulement avec une diode étant connecté entre une borne d'interrupteur et la borne commune de connexion du montage série du condensateur d'équilibrage et de la diode en parallèle avec un interrupteur adjacent de sorte que l'énergie électrique initialement emmagasinée dans les condensateurs d'équilibrage est, au moment de la fermeture des interrupteurs, stockée sous forme d'énergie magnétique dans les enroulements, puis réutilisée, au moment de l'ouverture des interrupteurs, pour accélérer la recharge des condensateurs les moins chargés jusqu'à atteindre la tension du condensateur le plus chargé.

Les condensateurs étant connectés en parallèle avec les interrupteurs, on assure ainsi l'équilibrage en tension des interrupteurs.

Avantageusement, le surplus d'énergie magnétique subsistant, après que les condensateurs d'équilibrage se soient rechargés, est restitué à la source d'alimentation.

De préférence, ce dispositif comporte deux interrupteurs, mais il peut comporter au moins trois interrupteurs sur lesquels sont connectés en parallèle au moins trois enroulements faisant partie d'un transformateur unique.

Selon un autre mode de réalisation, le dispositif peut être appliqué à la réalisation d'un onduleur dans lequel chaque demi-phase est constituée par des interrupteurs en série.

Il est décrit ci-après à titre d'exemple et en référence aux figures du dessin annexé, un dispositif d'équilibrage d'interrupteurs selon l'invention.

La figure 1 représente un dispositif de l'art antérieur dans lequel les interrupteurs sont des transistors.

La figure 2 représente un autre dispositif de l'art antérieur dans lequel les interrupteurs sont des thyristors blocables.

la figure 3 représente le dispositif selon l'invention dans lequel les interrupteurs sont par exemple, des transistors, ou selon un autre exemple, des thyristors blocables.

Les figures 4 et 5 montrent l'évolution des tensions et des courants dans les principaux éléments au cours d'un cycle complet d'ouverture et de fermeture des interrupteurs.

La figure 6 représente, à titre d'exemple, le dispositif selon l'invention, appliqué à la connexion en série de quatre interrupteurs.

La figure 7 représente, à titre d'exemple, le dispositif selon l'invention appliqué à la réalisation d'un onduleur.

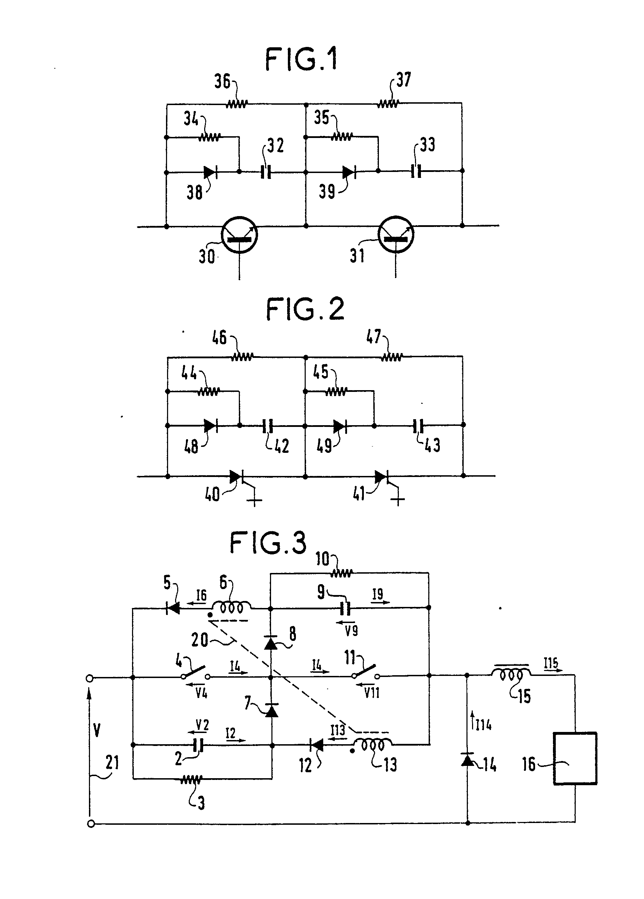

Dans la figure 1, les interrupteurs de ce dispositif antérieur sont des transistors 30, 31 sur lesquels sont branchés en parallèle, et respectivement, des condensateurs 32, 33 de valeur extrémement grande. L'énergie emmagasinée dans ces condensateurs est donc relativement élevée et à chaque fermeture de ces interrupteurs, cette énergie est dissipée dans des résistances respectivement 34, 35.

Dans la figure 2, les interrupteurs de ce dispositif antérieur sont des thyristors blocables 40, 41 sur lesquels sont branchés en parallèle et respectivement des condensateurs 42, 43.

Comme dans la figure 1, l'énergie emmagasinée dans ces condensateurs est donc relativement élevée et à chaque fermeture de ces interrupteurs cette énergie est dissipée dans des résistances respectivement 44, 45.

Dans la figure 3, les interrupteurs 4, 11 peuvent être soit des transistors, soit des thyristors blocables, et le dispositif comporte les éléments suivants: deux condensateurs 2 et 9 de valeurs égales, un transformateur 20 comportant deux enroulements 6 et 13 dont la 'résistance ohmique est supposée négligeable, comportant le même nombre de spires, et supposés parfaitement couplés, deux diodes 7 et 8 supposées parfaites, deux résistances 3 et 10 de valeurs égales, destinées à assurer l'équilibrage statique des tensions entre les interrupteurs 4 et 11, deux diodes 5 et 12 supposées parfaites, destinées à éviter que la présence des enroulements 6 et 13 perturbe l'équilibrage statique des tensions entre les condensateurs 2 et 9.

A titre d'exemple, le dispositif de la figure 3 représente un hacheur de tension, et ce dispositif fonctionne de la manière suivante.

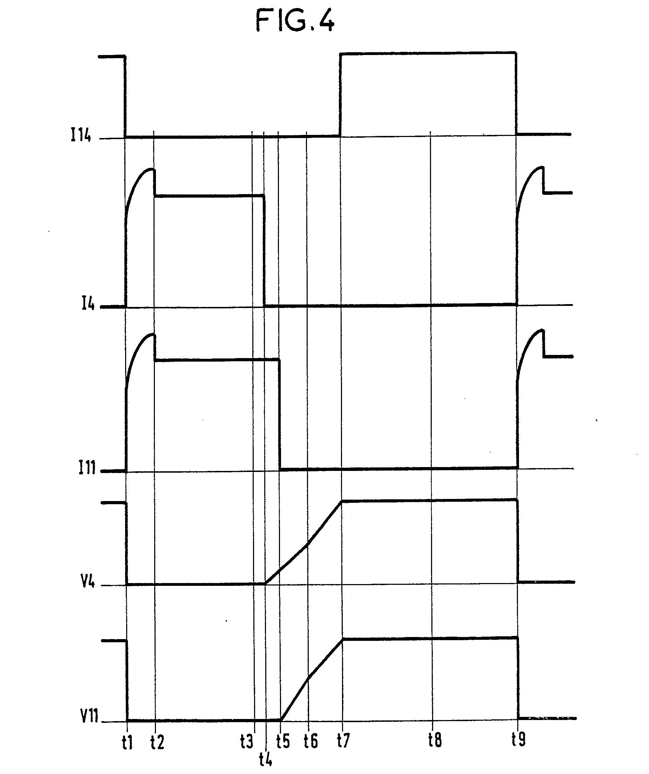

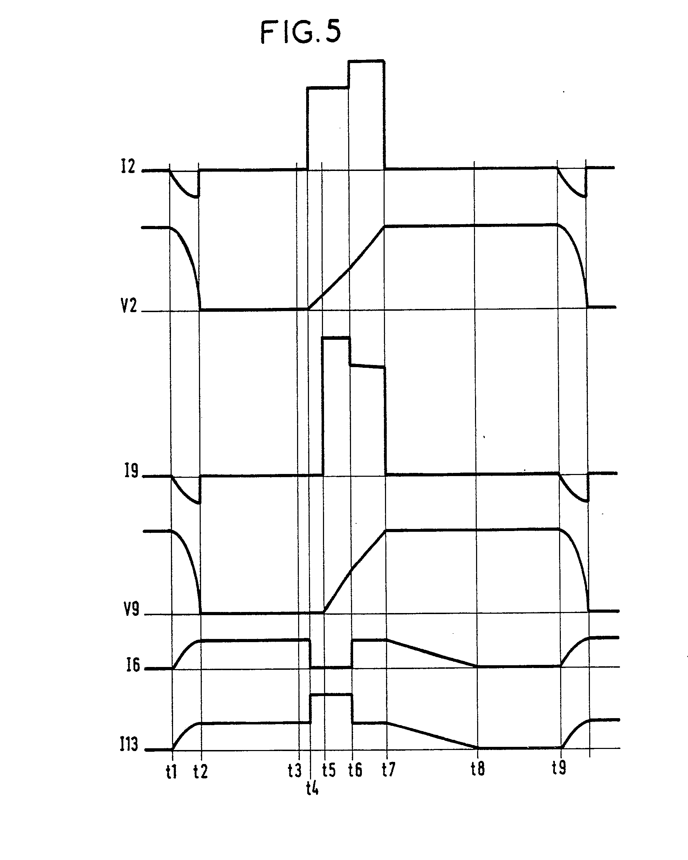

Il est alimenté à partir d'une source de tension continue 21 et est associé à une charge 16 et à un filtre constitué par l'inductance 15 et sa diode de démagnétisation 14. Le principe de fonctionnement d'un hacheur de tension étant supposé connu de l'homme de l'art, on se reportera aux figures 4 et 5 qui représentent les variations en fonction du temps des différents courants et tensions, pour suivre le fonctionnement de ce dispositif selon l'invention.

A l'instant $t_1$, on suppose que le fonctionnement antérieur du hacheur a provoqué la circulation d'un courant $I_{15}$ à travers la diode 14, l'inductance 15 et la charge 16. On suppose également que les deux interrupteurs 4 et 11 sont ouvert et que les condensateurs 2 et 9 sont chargés respectivement aux tensions $V_2$ et $V_9$, égales entre elles et telles que $V_2 + V_9 = V$.

A cet instant $t_1$, on provoque la fermeture des interrupteurs 4 et 11. Le courant $I_{15}$ traverse alors les interrupteurs 4 et 11 tandis que la diode 14 cesse de conduire.

Les condensateurs 2 et 9 commencent alors à se décharger, en provoquant l'apparition d'un courant $I_2$ à travers les éléments 4, 11, 13, 12 en ce qui concerne le condensateur 2 et en provoquant l'apparition d'un courant $I_9$ à travers les éléments 6, 5, 4 et 11 en ce qui concerne le condensateur 9.

A l'instant $t_2$, les condensateurs 2 et 9 sont complètement déchargés. Ils ont transmis leur énergie à l'enroulement 13 en ce qui concerne le condensateur 2 et à l'enroulement 6 en ce qui concerne le condensateur 9. Cette énergie est stockée sous la forme d'énergie magnétique et se manifeste par la présence d'un courant $I_6$ circulant à travers les éléments 5, 4 et 8 en ce qui concerne l'enroulement 6 et par la présence d'un courant $I_{13}$ circulant à travers les éléments 12, 7, 11 en ce qui concerne l'enroulement 13.

Les enroulements 6 et 13 ayant le même nombre de spires, les courants $I_6$ et $I_{13}$ sont égaux entre eux.

A l'instant $t_3$, on donne l'ordre d'ouverture des interrupteurs 4 et 11 qui, du fait de leur principe et des dispersions de fabrication, ne s'ouvriront en réalité qu'à l'instant $t_4$ pour l'interrupteur 4 et à l'instant $t_5$ pour l'interrupteur 11.

A l'instant $t_4$, l'ouverture de l'interrupteur 4 se produit. Le courant $I_4$ égal à $I_{15} + I_6$ qui traversait l'interrupteur 4, est interrompu. Ce courant est dérivé par le condensateur 2 qui commence à se charger.

La tension aux bornes de l'enroulement 6 restant égale à zéro du fait que l'enroulement 13 auquel il est couplé est court-circuité par l'interrupteur 11 encore fermé, la diode 5 cesse de conduire et le courant $I_6$ est interrompu. Le condensateur 2 n'est donc chargé que par le courant $I_{15}$.

La conservation des ampères-tours des enroulements 6 et 13 provoque une augmentation du courant $I_{13}$ qui continue de circuler à travers les éléments 12, 7, 11.

A l'instant $t_5$, l'interrupteur 11 s'ouvre à son tour et le courant $I_{11}$ égal à $I_{15} + I_{13}$ qui le traversait, est interrompu. Ce courant est dérivé par le condensateur 9 qui commence à se charger.

La tension aux bornes de l'enroulement 13 peut augmenter puisque l'enroulement 6 auquel il est couplé n'est pas court-circuité par l'interrupteur 4 ouvert depuis l'instant $t_4$. La diode 12 reste donc conductrice et le courant $I_{13}$ continue de circuler à travers les éléments 13, 12, 7 et 8. Le condensateur 9 est donc chargé par un courant égal à $I_{15} + I_{13}$.

On constate par conséquent que l'énergie magnétique emmagasinée dans l'enroulement 13 et qui est égale, en supposant les pertes négligeables, à la somme des énergies emmagasinées dans les enroulements 6 et 13 à l'instant $t_3$, sert donc à partir de l'instant $t_5$ à accélérer la recharge du condensateur 9 par rapport à la recharge du condensateur 2.

A l'instant $t_6$, la tension $V_9$ devient égale à la tension $V_2$ et le déséquilibre qui existait à l'instant $t_5$ a été compensé, ce qui est un des buts recherchés.

A l'instant $t_6$, la diode 5 redevient conductrice et le courant $I_6$ réapparait à travers les éléments 5, 2, 7 et 8.

L'égalité des tensions $V_2$ et $V_9$ et l'identité du nombre de spires des enroulements 6 et 13 impose l'égalité des courants $I_6$ et $I_{13}$. Les condensateurs 2 et 9 se chargent alors à la même vitesse puisque le condensateur 2 est chargé par le courant $I_{15} + I_6$ et que le condensateur 9 est chargé par le courant $I_{15} + I_{13}$, et que $I_6 = I_{13}$.

A l'instant $t_7$, on a $V_2 + V_9 = 2 V_2 = 2 V_9 = V$. La diode 14 redevient donc conductrice et dérive alors le courant $I_{15}$ qui cesse de charger les condensateurs 2 et 9.

A l'instant $t_7$, le courant $I_6 = I_{13}$ cesse de charger les condensateurs 2 et 9 car on ne peut avoir $V_2 + V_9$ supérieur à V puisque la diode 14 est conductrice.

On voit donc que malgré l'écart $t_5 - t_4$ des instants d'ouverture des interrupteurs 4 et 11, les tensions $V_4$ et $V_{11}$ aux bornes des interrupteurs 4 et 11, qui sont égales aux tensions $V_2$ et $V_9$ existant aux bornes des condensateurs 2 et 9, sont équilibrées et ne dépassent pas la moitié de la tension d'alimentation V.

A l'instant $t_7$, une partie importante de l'énergie magnétique initiale est encore emmagasinée dans les enroulements 6 et 13 et se manifeste par la circulation d'un courant $I_6 = I_{13}$ à travers les éléments 14, 13, 12, 7, 8, 6, 5 et la source d'alimentation.

Il y a donc restitution à la source d'alimentation de l'énergie magnétique encore emmagasinée dans les enroulements 6 et 13 et le courant $I_6 = I_{13}$ décroît linéairement en fonction du temps et devient égal à zéro à l'instant $t_8$.

On voit donc que l'énergie emmagasinée dans les condensateurs 2 et 9 à l'instant $t_1$ a été stockée dans les enroulements 6 et 13 entre les instants $t_2$ et $t_5$, puis à servi partiellement, entre les instants $t_5$ et $t_7$ à recharger les condensateurs 2 et 9 en assurant l'égalité des tensions $V_2$ et $V_9$, donc l'égalité des tensions $V_4$ et $V_{11}$, le surplus d'énergie étant restitué à la source d'alimentation entre les instants $t_7$ et $t_8$.

A l'instant $t_8$, le dispositif est à nouveau dans l'état où il se trouvait à l'instant $t_1$ et un autre cycle identique à celui qui vient d'être décrit peut recommencer, par exemple à l'instant $t_9$.

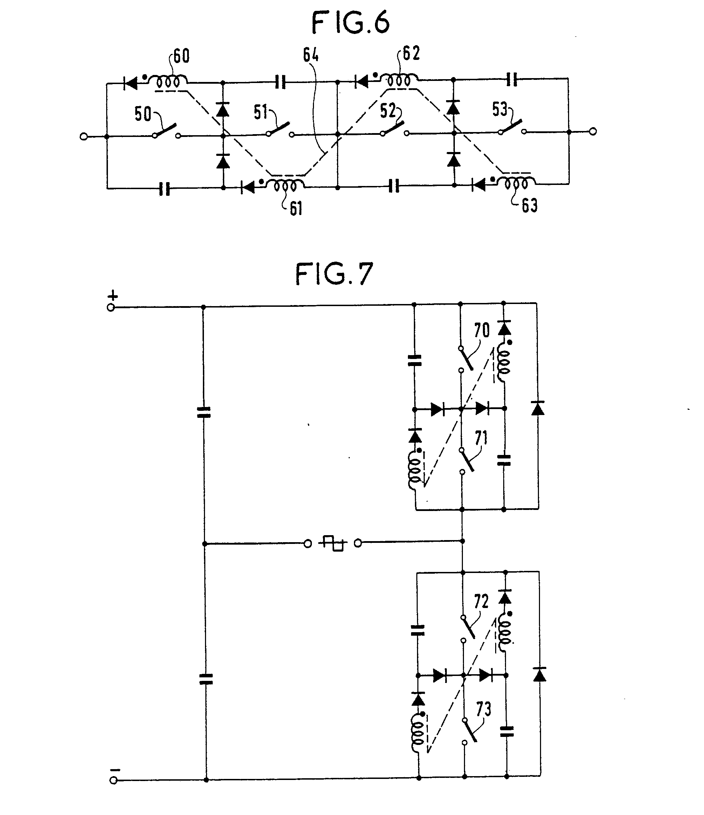

La figure 6 représente, le dispositif selon l'invention appliqué à la connexion en série de quatre interrupteurs 50, 51 52, 53. Les enroulements 60, 61, 62, 63 ont tous le même nombre de spires et sont couplés entre eux en étant disposés sur un circuit magnétique unique, par exemple, un transformateur 64. Des résistances d'équilibrage statique, non représentées, sont chacune en parallèle sur un condensateur ou sur un interrupteur.

La figure 7 représente le dispositif selon l'invention, appliqué à la réalisation d'un onduleur monophasé comportant dans chaque demi-phase deux interrupteurs connectés en série 70, 71; 72, 73. Des résistances d'équilibrage statique, non représentées, sont chacune en parallèle sur un condensateur ou sur un interrupteur.

Sans sortir du cadre de l'invention, ce dispositif peut s'étendre, d'une part à un nombre quelconque, mais de préférence pair, d'interrupteurs connectés en série, d'autre part, à toutes les applications nécessitant l'emploi d'interrupteurs connectés en série.

## Revendications

1. Dispositif d'équilibrage d'interrupteurs connectés en série entre une source de tension (21) et une charge (16) et actionnés simultanément, chaque interrupteur (4, 11) étant connecté en parallèle avec un montage en série d'un condensateur d'équilibrage (2, 9) et une diode (7, 8), caractérisé en ce qu'il comprend un transformateur (20) muni d'enroulements (6, 13), montés chacun en série avec une diode (5, 12), le montage série d'un enroulement (6, 13); avec une diode (5, 12) étant connecté entre une borne d'un interrupteur (4, 11) et la borne commune de connexion du montage série du condensateur d'équilibrage (9, 2) et de la diode (8, 7) en parallèle avec un interrupteur adjacent (11, 4) de sorte que l'énergie électrique initialement emmagasinée dans les condensateurs d'équilibrage est, au moment de la fermeture des interrupteurs, stockée sous forme d'énergie magnétique dans les enroulements (6, 13), puis réutilisée, au moment de l'ouverture des interrupteurs, pour accélérer la recharge des condensateurs les moins chargés jusqu'à atteindre la tension du condensateur le plus chargé.

2. Dispositif d'équilibrage selon la revendication 1, caractérisé en ce qu'il comprend des résistances (3, 10) pour assurer d'équilibrage statique des tensions entre les interrupteurs.

3. Dispositif d'équilibrage selon la revendication 1, caractérisé en ce qu'il comporte deux interrupteurs (4, 11).

4. Dispositif d'équilibrage selon la revendication 1, caractérisé en ce qu'il comporte au moins trois interrupteurs (50, 51, 52, 53) associés à au moins trois enroulements (60, 61, 62, 63) faisant partie d'un transformateur unique (64).

5. Onduleur comportant des dispositifs d'équilibrage selon la revendication 1, caractérisé en ce que chaque demi-phase est constitué par des interrupteurs en série.

## Patentansprüche

1. Ausgleichsvorrichtung für in Reihe zwischen einer Spannungsquelle (21) und einer Last (16) geschaltete Schalter, die gleichzeitig betätigt werden, wobei jeder Schalter parallel zu einer Reihenschaltung eines Ausgleichskondensators (2, 9) und einer Diode (7, 8) geschaltet ist, dadurch gekennzeichnet, daß sie einen Transformator (20) mit Wicklungen (6, 13) aufweist, von denen jede mit einer Diode (5, 12) in Reihe geschaltet ist, wobei die Reihenschaltung einer Wicklung (6, 13) mit einer Diode (5, 12) zwischen der Anschlußklemme eines Schalters (4, 11) und der gemeinsamen Verbindungsklemme der Reihenschaltung, des Ausgleichskondensators (9, 2) und der Diode (8, 7), parallel zu einem benachbarten Schalter (11, 4) geschaltet ist, derart, daß die ursprünglich in den Ausgleichskondensatoren gespeicherte elektrische Energie im Augenblick des Schließens des Schalters als magnetische Energie in den Wicklungen gespeichert wird und bei Öffnen der Schalter erneut genutzt wird, um die Wiederaufladung der am wenigsten geladenen Kondensatoren bis Erreichen der Spannung der am meisten geladenen Kondensatoren zu beschleunigen.

2. Ausgleichsvorrichtung nach Anspruch 1, dadurch gekennzeichnet, daß sie Widerstände (3, 10) zur Sicherung des statischen Spannungsausgleichs zwischen den Schaltern aufweist.

3. Ausgleichsvorrichtung nach Anspruch 1, dadurch gekennzeichnet, daß sie zwei Schalter (4, 11) aufweist.

4. Ausgleichsvorrichtung nach Anspruch 1, dadurch gekennzeichnet, daß sie mindestens drei Schalter (50, 51, 52, 53), assoziiert mit mindestens drei Wicklungen (60, 61, 62, 63) aufweist, welche Bestandteile eines einzigen Transformators (64) sind.

5. Umwandler mit Ausgleichsvorrichtungen nach Anspruch 1, dadurch gekennzeichnet, daß jede Halbphase aus in Reihe geschalteten Schaltern besteht.

## Claims

1. An equalizer device for switches connected in series between a voltage source (21) and a load (16), actuated simultaneously and each switch (4, 11) being connected in parallel with a series connection of an equalizing capacitor (2, 9) and a respective diode (7, 8), characterized in that it comprises a transformer (20) having windings (6, 13) each connected in series with a diode (5, 12), wherein the series connection of one winding (6, 13) with one diode (5, 12) is connected between a terminal of a switch (4, 11) and the common connection terminal of the series connection, the equalizing capacitor (9, 2) and the diode (8, 8) parallel to an adjacent switch (11, 4), in such a way that the electrical energy initially stored in the equalizing capacitors is stored in magnetic form in the windings (6, 13) when the switches are going to be closed and re-used when the switches are opened in order to accelerate charging of the less charged capacitors until all the capacitors reach the voltage of the most charged capacitor.

2. An equalizer according to claim 1, characterized in that it comprises resistors (3, 1) for ensuring static equalization of the voltages between the switches.

3. An equalizer device according to claim 1, characterized in that it comprises two switches (4, 11).

4. An equalizer according to claim 1, characterized in that it comprises at least three switches (50, 51, 52, 53) associated with at least three windings (60, 61, 63, 63) constituting part of a single transformer (64).

5. An inverter including equalizer devices according to claim 1, characterized in that each half phase is constituted by a series connection of switches.

# FIG.1

# FIG.2

# FIG.3

# FIG.4

FIG.5

# FIG.6

# FIG.7

4